(19) Europäisches Patentamt
European Patent Office
Office européen des brevets

(11) EP 3 885 031 B1

# (12) EUROPEAN PATENT SPECIFICATION

(45) Date of publication and mention of the grant of the patent:
**14.08.2024 Bulletin 2024/33**

(21) Application number: **19901810.2**

(22) Date of filing: **23.12.2019**

(51) International Patent Classification (IPC):
***B01D 61/02*** (2006.01) ***B01D 69/02*** (2006.01)
***C01D 3/14*** (2006.01) ***C01D 5/16*** (2006.01)
***C01F 5/30*** (2006.01) ***C01F 11/32*** (2006.01)
***C22B 26/10*** (2006.01) ***C22B 26/12*** (2006.01)
***C22B 3/22*** (2006.01) ***C02F 1/44*** (2023.01)
***B01D 69/12*** (2006.01) ***B01D 71/56*** (2006.01)
***C01D 15/08*** (2006.01) ***C02F 101/10*** (2006.01)

(52) Cooperative Patent Classification (CPC):
**B01D 61/027; B01D 69/02; B01D 69/1251; B01D 71/56; C01D 3/14; C01D 5/16; C01D 15/08; C22B 3/22; C22B 26/10; C22B 26/12;**
B01D 2323/30; B01D 2325/20; C02F 1/442; C02F 2101/10; Y02P 10/20

(86) International application number:
**PCT/JP2019/050365**

(87) International publication number:
**WO 2020/137974 (02.07.2020 Gazette 2020/27)**

## (54) ALKALI METAL SALT MANUFACTURING METHOD

VERFAHREN ZUR HERSTELLUNG VON ALKALIMETALLSALZEN

PROCÉDÉ DE FABRICATION DE SEL DE MÉTAL ALCALIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2018 JP 2018242779**

(43) Date of publication of application:
**29.09.2021 Bulletin 2021/39**

(73) Proprietor: **Toray Industries, Inc.**
**Tokyo 103-8666 (JP)**

(72) Inventors:
- **MINEHARA, Hiroki**
**Otsu-shi, Shiga 520-8558 (JP)**
- **KOIWA, Masakazu**
**Otsu-shi, Shiga 520-8558 (JP)**

(74) Representative: **Prüfer & Partner mbB**
**Patentanwälte · Rechtsanwälte**
**Sohnckestraße 12**
**81479 München (DE)**

(56) References cited:
**WO-A1-2012/074074**
**WO-A1-2012/077610**
**WO-A1-2012/093724**
**WO-A1-2013/005694**
**WO-A1-2013/005694**
**WO-A1-2013/146391**
**CN-A- 104 310 446**
**JP-A- 2018 535 309**
**US-A1- 2013 292 333**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The present invention relates to a method for recovering an alkali metal such as lithium or potassium from lake water, ground water, industrial wastewater, and the like and more specifically relates to a method for efficiently recovering an alkali metal using a plurality of stages of a nanofiltration membrane.

BACKGROUND ART

Recently, a demand for mineral resources has been remarkably growing with global economical development. However, among mineral resources indispensable for various industries including the semiconductor industry, quite a few resources are not economically viable owing to high costs for mining and refining even though the reserves in the earth's crust are large, or are localized in particular areas and whose mining has been hitherto postponed. Meanwhile, environmental problems have also been highlighted and thus it is desired to construct a recycling society. In particular, the reduction of carbon dioxide emissions is focused, and the development of electric vehicles as well as motors and batteries used therein has been accelerated. Particularly, regarding the batteries, a lithium ion secondary battery is expected as a main battery for the electric vehicles because of its energy density and lightweight.

As uses of lithium compounds, for example, lithium carbonate is used as an electrode material of lithium ion batteries and an additive for heat-resistant glass and also for elastic surface wave filters. In particular, highly pure one has been used as a filter and emitter for cell phones, car navigation systems, and the like. Lithium bromide is used as coolant absorbers of absorption-type freezers for large air conditioners for building, factories, and the like, and lithium hydroxide is used as grease for automobiles and the like and a raw material for lithium batteries (primary and secondary). Metal lithium is used as a foil as the anode material of primary batteries and a raw material for butyl lithium for synthetic rubber catalysts.

The lithium salts are contained in salt lake brines and ores. With regard to the salt lake brines, costs for resource recovery are relatively low. The salt lake brines are mainly present in Chili, Bolivia, and Argentina in large amounts. The salt lake brines are mainly classified into chloride brines, sulfate salt brines, carbonate salt brines, and calcium brines based on the composition and the sulfate salt brines are the richest.

Moreover, potassium that is also an alkali metal has been widely used in fertilizers as well as foods, feeds, industrial chemicals, medicaments, and the like.

An alkali metal is obtained as a mixture with other substances and is purified as a specific metal salt such as lithium carbonate or potassium chloride. In the mixture, a substance that inhibits purification may be contained. Such a substance includes a sulfate salt, an alkaline earth metal.

Patent Document 1 discloses a method for separating and recovering a purified alkali metal salt from an alkali metal salt solution that is a raw water, in which the purification-inhibiting substance is removed using an NF membrane.

Patent Document 2 describes a method for separating and recovering a purified alkali metal salt from an aqueous alkali metal salt solution including removing a purification-inhibiting substance from an aqueous alkali metal salt solution with a separation membrane. For the membrane, the glucose removal ratio is equal to or greater than 90% and the difference between the glucose removal ratio and the isopropyl alcohol removal ratio is equal to or greater than 30%.

Patent Document 3 describes a method for separating and recovering an alkali metal comprising subjecting raw water that contains an alkali metal to separation by permeation with use of a nanofiltration membrane, subjecting the nanofiltration membrane permeated water to separation by permeation with use of a concentration unit, and recovering at least some of the alkali metal that is contained in the concentration unit concentrated water.

Patent Document 4 describes a method for separation and recovery of alkali metal in which raw water containing an alkali metal and a bivalent ion is permeably separated using a nanofiltration membrane to yield permeated water and concentrated water, the bivalent ion being removed from the concentrated water and circulated back to the raw water, and at least part of the alkali metal being recovered from the permeated water.

Patent Document 5 describes an alkali metal separation and recovery method comprising a step for separating filtration water from raw water using a nanofiltration membrane and a step for recovering the alkali metal contained in the filtration water by posttreatment. Herein, dilution water is added to the raw water and then the raw water is fed to a nanofiltration filter unit comprising the nanofiltration membrane.

Patent Document 6 describes an alkali metal separation and recovery method that comprises separation of an alkali metal-containing permeate from raw water containing alkali metals using a nanofiltration membrane and recovery of the alkali metal contained in the permeate using an after-treatment. The nanofiltration membrane unit is configured in at least two stages and the concentrated water from the preceding nanofiltration membrane unit is used as the water supplied to the latter nanofiltration membrane unit.

BACKGROUND ART DOCUMENT

PATENT DOCUMENT

Patent Document 1: WO2012/074074
Patent Document 2: US 2013/0292333 A1
Patent Document 3: WO 2013/005694 A1
Patent Document 4: WO 2013/146391 A1
Patent Document 5: WO 2012/093724 A1
Patent Document 6: WO 2012/077610 A1

SUMMARY OF THE INVENTION

PROBLEMS THAT THE INVENTION IS TO SOLVE

In the removal of the purification-inhibiting substance using a separation membrane, when the salt concentration in the raw water is high, or when the salt concentration in the concentrated water becomes high resulting from high-recovery operation (an operation method where the ratio of the volume of the obtained permeation water to the volume of the raw water is made high), an amount of produced water sometimes decreases due to the occurrence of inorganic scales. An object of the invention is to provide a method for efficiently and steadily recovering alkali metals such as lithium and potassium from lake water, ground water, industrial waste water, and the like.

MEANS FOR SOLVING THE PROBLEMS

In order to solving the above-mentioned problem, the present invention relates to the following constitutions.

(1) A method for producing an alkali metal salt, including:

a pretreatment step of removing a purification-inhibiting substance from an aqueous alkali metal salt solution with a separation membrane selected to have a glucose removal ratio and an isopropyl alcohol removal ratio simultaneously satisfying the following expressions (1) and (2) when each of a 1000 ppm aqueous glucose solution having a temperature of 25°C and pH of 6.5 and a 1000 ppm aqueous isopropyl alcohol solution having a temperature of 25°C and pH of 6.5 is permeated through the separation membrane at an operating pressure of 0.75 MPa and
a recovery step of recovering an alkali metal salt from the aqueous alkali metal salt solution after the pretreatment step:

$$90\% > \text{Glucose removal ratio} \geq 50\% \ \ldots\ (1),$$

$$\text{Glucose removal ratio} - \text{Isopropyl alcohol removal ratio} \geq 50\% \ \ldots\ (2),$$

wherein the purification-inhibiting substance includes alkaline earth metal salts and sulfate salts, and
wherein the separation membrane is a nanofiltration membrane having a nonwoven fabric substrate, a polysulfone support provided on the substrate, and a polyamide functional layer provided on the support, wherein the polyamide functional layer contains a crosslinked polyamide obtained by interfacial polymerization of a piperazine compound represented by the general formula (1) with a divalent of multivalent polyfunctional acid halide,

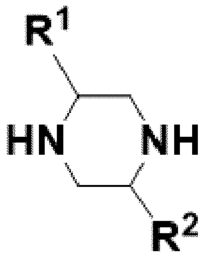

formula (1)

wherein $R^1$ of the general formula (1) represents an alkyl group having 1 to 6 carbon atoms, a phenyl group, a benzyl group, $COOR^3$, $CONHR^3$, $CONR^3_2$ or $OR^3$, and $R^3$ represents a hydrogen, an alkyl group having 1 to 6 carbon atoms, a phenyl group or a benzyl group, and $R^2$ represents a hydrogen, an alkyl group having 1 to 6 carbon atoms, a phenyl group, a benzyl group, $COOR^4$, $CONHR^4$, $CONR^4_2$ or $OR^4$, and $R^4$ represents a hydrogen, an alkyl group having 1 to 6 carbon atoms, a phenyl group or a benzyl group.

(2) The method for producing an alkali metal salt according to (1), in which a calcium ion concentration in the aqueous alkali metal salt solution is 0.01 times or more and 100 times or less the lithium ion concentration.
(3) The method for producing an alkali metal salt according to (1) or (2), in which a lithium ion concentration in the aqueous alkali metal salt solution falls within the range of 0.5 ppm or more to 10000 ppm or less.
(4) The method for producing an alkali metal salt according to any one of (1) to (3), in which a magnesium ion concentration in the aqueous alkali metal salt solution is 1000 times or less the lithium ion concentration.
(5) The method for producing an alkali metal salt according to any one of (1) to (4), in which an amount of permeated water is 2.5 $m^3/m^2$/day or more when each of a 1000 ppm aqueous glucose solution having a temperature of 25°C and pH of 6.5 and a 1000 ppm aqueous isopropyl alcohol solution having a temperature of 25°C and pH of 6.5 is permeated through the separation membrane at an operating pressure of 0.75 MPa.
(6) The method for producing an alkali metal salt according to any one of (1) to (5), including a step of mixing a part of the aqueous alkali metal salt solution with a permeated water resulting from the pretreatment step.
(7) The method for producing an alkali metal salt according to any one of (1) to (6), in which the pretreatment step removes the purification-inhibiting substance in the aqueous alkali metal salt solution and also enriches s lithium.
(8) The method for producing an alkali metal salt according to any one of (1) to (7), in which, the recovery step enriches the alkali metal salt in the aqueous alkali metal salt solution after the pretreatment step.
(9) The method for producing an alkali metal salt according to any one of (1) to (8), in which the pretreatment step is performed until the magnesium ion concentration in the aqueous alkali metal salt solution becomes 7 times or less the lithium ion concentration.
(10) The method for producing an alkali metal salt according to any one of (1) to (9), in which the purification-inhibiting substance is at least one selected from the group consisting of a magnesium salt and a sulfate salt.
(11) The method for producing an alkali metal salt according to any one of (1) to (10), in which an operating pressure of the membrane separation at the pretreatment step is equal to or lower than an osmotic pressure of the aqueous alkali metal salt solution.
(12) The method for producing an alkali metal salt according to any one of (1) to (11), in which the separation membrane has a magnesium sulfate removal ratio of 70% or more when a 2000 ppm aqueous magnesium sulfate solution having a temperature of 25°C and pH of 6.5 is permeated through the separation membrane at an operating pressure of 0.75 MPa.
(13) The method for producing an alkali metal salt according to any one of (1) to (12), in which the separation membrane has a lithium chloride removal ratio of 20% or less when a 2000 ppm aqueous lithium chloride solution having a temperature of 25°C and pH of 6.5 is permeated through the separation membrane at an operating pressure of 0.75 MPa.
(14) The method for producing an alkali metal salt according to any one of (1) to (13), in which, in the pretreatment step, the aqueous alkali metal salt solution is supplied to the separation membrane in the pressure range of 0.1 MPa or more to 8 MPa or less.

ADVANTAGE OF THE INVENTION

According to the present invention, it becomes possible to efficiently and steadily recover alkali metals such as lithium and potassium from aqueous solutions in which various solutes are present together.

MODE FOR CARRYING OUT THE INVENTION

1. Method for Producing Alkali Metal Salt

The method for producing an alkali metal salt to be described below comprises:

- a pretreatment step of removing a purification-inhibiting substance from an aqueous alkali metal salt solution and
- a recovery step of recovering an alkali metal salt from the aqueous alkali metal salt solution after the pretreatment step.

2. Pretreatment Step

2-1 Aqueous Alkali Metal Salt Solution

The aqueous alkali metal salt solution has only to contain at least a lithium salt. For example, in a salt lake brine, there are dissolved salts of one or more kinds of elements selected from the group consisting of alkali metals such as sodium, potassium, rubidium, and cesium other than lithium, alkaline earth metals such as magnesium, calcium, and strontium, typical elements (aluminum, tin, lead, etc.), and transition metals (iron, copper, cobalt, manganese, etc.), with one or more kinds of conjugate bases (e.g., chloride ion, nitrate ion, sulfate ion, carbonate ion, acetate ion, etc.).

The concentration of each ingredient is not particularly limited and, from the view point of efficiency of separation and recovery, it is preferred to use an aqueous solution having a lithium ion concentration within a range of 0.5 ppm or more to 10,000 ppm or less, more preferably 5 ppm or more to 5,000 ppm or less, and even more preferably 50 ppm or more to 2,000 ppm or less as a raw water. If necessary, it is possible to provide the solution as raw water after treatment such as concentration or dilution.

The aqueous alkali metal salt solution contains, as the purification-inhibiting substances, alkaline earth metal salts and sulfate salts. The purification-inhibiting substances may include, in particular, magnesium salts, sulfate salts.

The composition and concentration of the purification-inhibiting substances in the aqueous alkali metal salt solution vary and, for example, a salt lake brine contains calcium ion, magnesium ion, and sulfate ion each in the range of 100 ppm or more to 500,000 ppm or less. From the viewpoint of efficiency of separation and recovery of an alkali metal salts from the aqueous alkali metal salt solution, the magnesium ion concentration in the aqueous alkali metal salt solution as a raw water is preferably 1000 times or less the lithium ion concentration, and it is more preferably 500 times or less or 100 times or less. The calcium ion concentration in the aqueous alkali metal salt solution as a raw water is preferably 0.01 times more and 100 times or less the lithium ion concentration, and it is more preferably 0.1 times or more and 50 times or less, and even more preferably 2 times or more and 10 times or less.

2-2. Separation Membrane

In general, the above alkali metal salt(s) is purified by precipitation. The precipitation is induced by concentration, heating, and/or cooling of the aqueous solution or addition of a nucleating agent. The purification-inhibiting substance is a substance that inhibits the purification by precipitation, and includes magnesium salts and sulfate salts.

In the pretreatment step, the purification-inhibiting substances are separated from an alkali metal salt by using a separation membrane. For the separation, particularly, a separation membrane exhibiting a glucose removal ratio and an isopropyl alcohol removal ratio satisfying the following expressions (1) and (2) is used:

$$90\% > \text{Glucose removal ratio} \geq 50\% \ \ldots \ (1),$$

$$\text{Glucose removal ratio} - \text{Isopropyl alcohol removal ratio} \geq 50\% \ \ldots \ (2).$$

The glucose removal ratio and the isopropyl alcohol removal ratio are each measured under conditions of an operating pressure of 0.75 MPa, a temperature of 25°C, pH of 6.5, and a concentration of 1000 ppm.

Surprisingly, it is found that the separation membrane satisfying the above expressions (1) and (2) have high selective separation ability toward an alkali metal ion and purification-inhibiting substances (multivalent ions such as calcium ion, magnesium ion, and sulfate ion) while preventing the occurrence of inorganic scales. Although detail of the reason is unclear, it is considered that the ionic ingredients that are solute in the raw water and the membrane surface ionically or physically interact with each other to change actual pore size and charge of the membrane and thus the membrane has an effect of preventing the enrichment of multivalent ions (calcium ion, magnesium ion) that causes the scale occurrence.

Furthermore, an amount of permeated water is preferably 2.5 $m^3/m^2$/day or more at the time when each of a 1000 ppm aqueous glucose solution or aqueous isopropyl alcohol solution having a temperature of 25°C and pH of 6.5 is permeated through the separation membrane at an operating pressure of 0.75 MPa. When this requirement is satisfied, an amount of concentrated water (waste water) can be reduced as a high recovery rate operation without increasing operating pressure. In addition, a highly efficient process can be achieved, for example, a multistep treatment of the concentrated water is unnecessary and the number of treatment times can be reduced.

Moreover, with regard to the separation membrane, a magnesium sulfate removal ratio is preferably 70% or more, more preferably 75% or more, and further preferably 80% or more when a 2000 ppm aqueous magnesium sulfate solution having a temperature of 25°C and pH of 6.5 is permeated through the separation membrane at an operating pressure of 0.75 MPa.

Further, with regard to the separation membrane, a lithium chloride removal ratio is preferably 20% or less, more preferably 5% or less, and further preferably 1% or less when a 2000 ppm aqueous lithium chloride solution having a temperature of 25°C and pH of 6.5 is permeated through the separation membrane at an operating pressure of 0.75 MPa.

By using a separation membrane satisfying these ranges of the magnesium sulfate removal ratio and the lithium chloride removal ratio, the separation of a lithium salt from the purification-inhibiting substances is steadily achieved at extremely highly efficiency, independent of total salt concentration of hardness ingredients in the raw water to be treated which become a risk of occurrence of inorganic scales.

The separation membrane of the present invention is a membrane of a range having a fractionation characteristic positioned between a reverse osmosis membrane and an ultrafiltration membrane, which is generally defined as a nanofiltration membrane. A membrane commonly known as a reverse osmosis membrane actually tends to remove most of organic substances and ions. On the other hand, an ultrafiltration membrane does not remove most of ions but removes high-molecular-weight organic substances.

The nanofiltration membrane is defined as a "pressure-driven membrane where particles and dissolved macromolecules smaller than 2 nm are rejected". For the application to the invention, a nanofiltration membrane having charge on the membrane surface is preferable. The membrane having charge has particularly high separation efficiency for ions by the combination of separation through fine pores (size separation) and electrostatic separation because of the charge on the membrane surface. Therefore, the nanofiltration membrane can remove polymers by the size separation while separating the target alkali metal ion for recovery from the other ions having different charge properties by the charge.

For materials of the nanofiltration membrane, polymers such as cellulose acetate polymers, polyamides, sulfonated polysulfones, polyacrylonitrile, polyesters, polyimides, and vinyl polymers and the like are used. The nanofiltration membrane may be composed of only one kind of the material or may be composed of a plurality of the materials. With regard to the membrane structure, the membrane may be an asymmetric membrane having a dense layer on at least one face of the membrane and having micropores whose pore size gradually increases from the dense layer to the inside of the membrane or another face, or a composite membrane having a very thin functional layer made of the different material on the dense layer of the asymmetric membrane.

The composite membrane is a membrane having a nonwoven fabric substrate, a polysulfone support provided on the substrate, and a polyamide functional layer provided on the support. The polyamide is formed by a polycondensation reaction of a polyfunctional amine with a polyfunctional acid halide.

In the case where the separation-functional layer contains a crosslinked polyamide obtained by using a piperazine having no substituent as a polyfunctional amine, the divalent ion removal performance of the separation membrane is higher than the monovalent ion removal performance. That is, such a separation membrane is excellent in selective separation of ions.

Moreover, the separation-functional layer contains a crosslinked polyamide obtained by interfacial polymerization of a piperazine compound represented by the general formula (1) with a divalent or multivalent polyfunctional acid halide. A separation membrane having such a separation-functional layer exhibits high removal performance of low-molecular organic substance. This is because the space between the crosslinked polyamide chains is broadened by the substituent(s) of the piperazine ring and hence pore size distribution suitable for the removal of the low-molecular substances is obtained.

[Chem. 1]

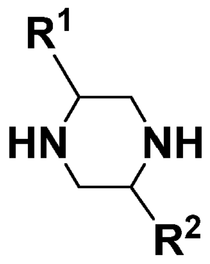

(1)

The separation-functional layer preferably contains 90% by weight or more of the aforementioned crosslinked polyamide and is more preferably composed of the crosslinked polyamide alone.

$R^1$ of the general formula (1) represents an alkyl group having 1 to 6 carbon atoms, a phenyl group, a benzyl group, $COOR^3$, $CONHR^3$, $CONR^3_2$ or $OR^3$, and $R^3$ represents a hydrogen, an alkyl group having 1 to 6 carbon atoms, a phenyl group or a benzyl group. $R^2$ represents a hydrogen, an alkyl group having 1 to 6 carbon atoms, a phenyl group, a benzyl group, $COOR^4$, $CONHR^4$, $CONR^4_2$ or $OR^4$, and $R^4$ represents a hydrogen, an alkyl group having 1 to 6 carbon atoms, a phenyl group or a benzyl group. The alkyl group having 1 to 6 carbon atoms in $R^1$ to $R^4$ includes a linear or branched methyl, ethyl, propyl, butyl, pentyl, hexyl, and further, cyclic ones such as cyclopropyl, cyclobutyl, cyclopentyl and cyclohexyl, and is preferably a linear or branched methyl, ethyl, or propyl.

The piperazine compound represented by the general formula (1) may be used alone or as a mixture of two or more thereof. When the piperazine structure has a substituent, the molecular space of the polyamide crosslinked structure is uniformly broadened and the pore size distribution is suitably controlled.

The polyfunctional acid halide is an acid halide having at least two halogenated carbonyl groups in one molecule thereof, and is not particularly limited so long as it affords the polyamide by the reaction with the above piperazine compound. As the polyfunctional acid halide, for example, halides of oxalic acid, malonic acid, maleic acid, fumaric acid, glutaric acid, 1,3,5-cyclohexanetricarboxylic acid, 1,3-cyclohexanedicarboxylic acid, 1,4-cyclohexanedicarboxylic acid, 1,3,5-benzenetricarboxylic acid, 1,2,4-benzenetricarboxylic acid, 1,3-benzenedicarboxylic acid, 1,4-benzenedicarboxylic acid, and the like can be used. Of the acid halides, acid chlorides are preferred, and particularly, from the viewpoint of economical efficiency, easy availability, easy handling, easy reactivity, and the like, preferred are trimesic acid chloride that is an acid chloride of 1,3,5-benzenetricarboxylic acid, isophthalic acid chloride that is an acid chloride of 1,3-benzenedicarboxylic acid, and terephthalic acid chloride that is an acid chloride of 1,4-benzenedicarboxylic acid. The above polyfunctional acid halides may be used alone or as a mixture of two or more thereof. By mixing either one of bifunctional isophthalic acid chloride and terephthalic acid chloride with trifunctional trimesic acid chloride, the molecular space of the polyamide crosslinked structure is further broadened and a membrane having uniform pore size distribution can be controlled in a wide range. The mixing molar ratio of the trifunctional acid chloride to the bifunctional acid chloride is preferably 1:20 to 50:1 and more preferably 1:1 to 20:1.

2-3. Pretreatment

In this step, an alkali metal salt contained in an aqueous alkali metal salt solution is separated from purification-inhibiting substances by a separation membrane. For the sake of convenience, the aqueous alkali metal salt solution to be pretreated is referred to as "raw water". Since an alkali metal salt easily permeates through the separation membrane whereas purification-inhibiting substances do not easily permeate the separation membrane, the alkali metal salt is separated from the purification-inhibiting substances.

Moreover, particularly, in the case of using a separation membrane containing the piperazine compound represented by the above general formula (1) as a monomer component, the alkali metal ion concentration in the raw water subject to pretreatment is preferably 50,000 ppm or more and 100,000 ppm or less as the weight in terms of sodium ion. Within the concentration range, the alkali metal salts are efficiently separated from the purification-inhibiting substances.

In general, under high salt concentration conditions, an activity coefficient decreases and ion shielding effect against a charged membrane works. It is considered that under such conditions, size separation becomes more effective than separation by charge repulsion and affinity to the membrane for inorganic salts, so that enrichment of lithium at the permeation side becomes possible. Furthermore, it is considered that active transportation of easily permeable substances toward the permeation side occurs due to a concentration polarization effect on the separation membrane surface under specific concentration conditions, and hence lithium transfer to the permeate side is promoted.. In other words, the pretreatment step removes the purification-inhibiting substance in the aqueous alkali metal salt solution and

also enriches lithium.

The weight in terms of an ion is calculated by measuring target ion concentration through an ion chromatography or the like and multiplying the concentration by molecular weight (23 in case of Na).

In the filtration through the nanofiltration membrane, the above aqueous alkali metal salt solution is preferably supplied to the nanofiltration membrane in the pressure range of 0.1 MPa or more to 8 MPa or less. When the pressure is lower than 0.1 MPa, the membrane permeation rate decreases and when the pressure is higher than 8 MPa, damage to the membrane is concerned. Moreover, when the solution is supplied at a pressure of 0.5 MPa or more to 6 MPa or less, the aqueous metal salt solution can be efficiently permeated because of a high membrane permeation flux and less possibility of damage to the membrane, hence the case is more preferred. Supply of the solution at a pressure of 1 MPa or more to 4 MPa or less is particularly preferred. In the filtration through the nanofiltration membrane, the possibility of damage to the membrane is further decreased by performing the permeation at a pressure equal to or lower than the osmotic pressure of the aqueous alkali metal salt solution.

At the pretreatment step, it is preferred to repeat the removal treatment with the separation membrane until the magnesium ion concentration in the permeated water becomes 7 times or less than the lithium ion concentration in the permeated water. When the ratio is 7 times or less, recovery efficiency of the alkali metal salt(s) increases. In this regard, the weight of the purification-inhibiting substances in the permeated water was calculated as weight in terms of an ion such as magnesium ion or sulfate ion. Moreover, the weight in terms of lithium ion and the weight of the purification-inhibiting substances are determined by quantitative determination of concentrations of various ions in the aqueous solution containing alkali metal salts through ion-chromatographic measurement.

Furthermore, to make a metal salt ingredient ratio suitable for the subsequent step of obtaining the alkali metal salt(s) by concentration or the like, it is preferred to mix a portion of the aqueous alkali metal salt solution with the permeated water generated in the pretreatment step of removing the purification-inhibiting substances with the separation membrane.

3. Recovery Step

In this step, the alkali metal salt(s) is recovered from the aqueous alkali metal salt solution that is the permeated water obtained at the pretreatment step.

The recovery step preferably includes concentration of the aqueous alkali metal salt solution.

The recovery of the alkali metal salt(s) is performed by a known method, for example, in the case where the alkali metal salt is a potassium salt, by utilizing temperature dependency of solubility or by adding a poor solvent such as ethanol.

A lithium salt is less soluble than other alkali metal salts. For example, sodium carbonate and potassium carbonate exhibit high solubility in water (20 g or more with respect to 100 mL of water) but lithium carbonate dissolves only in an amount of 1.33 g with respect to 100 mL of water at 25 °C. Accordingly, by adding a carbonate to the aqueous alkali metal salt solution, lithium can be recovered as lithium carbonate. Since the solubility of lithium carbonate further decreases at high temperature, the aqueous solution may be heated.

For production methods of the separation membrane elements, methods disclosed in JP-B-44-14216, JP-B-4-11928, JP-A-11-226366, and the like can be used.

EXAMPLES

The following will describe the present invention with reference to Examples but the invention is not limited to these Examples. Measurements in Example and Comparative Examples were performed as follows.

(Isopropyl alcohol removal ratio)

A 1000 ppm aqueous isopropyl alcohol solution adjusted to a temperature of 25°C and pH of 6.5 was supplied to a separation membrane at an operating pressure of 0.75 MPa. The isopropyl alcohol concentration in permeated water and that in supplying water were compared for evaluation. Namely, the ratio was calculated as follows: Isopropyl alcohol removal ratio (%) = 100 x (1-(isopropyl alcohol concentration in permeated water/isopropyl alcohol concentration in supplying water)). In this regard, the isopropyl alcohol concentration was determined by a gas chromatograph (GC-18A manufactured by Shimadzu Corporation).

(Glucose removal ratio)

A 1000 ppm aqueous glucose solution adjusted to a temperature of 25°C and pH of 6.5 was supplied to a separation membrane at an operating pressure of 0.75 MPa. The glucose concentration in permeated water and that

in supplying water were compared for evaluation. Namely, the ratio was calculated as follows: Glucose removal ratio (%) = 100 x (1-(glucose concentration in permeated water/glucose concentration in supplying water)). In this regard, the glucose concentration was determined by a refractometer (RID-6A manufactured by Shimadzu Corporation).

(Preparation of brine)

Two kinds of aqueous solutions containing various metal salts were prepared under the following conditions.
As a brine A, lithium chloride (129 g), sodium chloride (1569 g), sodium tetraborate (312 g), sodium sulfate (759 g), potassium chloride (183 g), magnesium chloride (459 g), and calcium chloride (60 g) were each added to 30 L of pure water and dissolved with stirring at 25°C for 8 hours. The solution was filtered (No. 2 filter paper) and concentrations of various ions in the resulting solution were quantitatively determined by ion chromatographic measurement and were as shown in Table 1.
As a brine B, lithium chloride (63 g), sodium chloride (1395 g), sodium tetraborate (154 g), sodium sulfate (378 g), potassium chloride (915 g), magnesium chloride (765 g), and calcium chloride (30 g) were each added to 30 L of pure water and dissolved with stirring at 25°C for 8 hours. The pH was adjusted with hydrochloric acid. The solution was filtered (No. 2 filter paper) and concentrations of various ions in the resulting solution were quantitatively determined by ion chromatographic measurement and were as shown in Table 1.

(Ion removal ratio)

Each of the above brines adjusted to a temperature of 25°C was supplied to a separation membrane at an operating pressure of 2.0 MPa. The salt concentration of permeated water was determined by ion chromatographic measurement based on the following equation.

Ion removal ratio = 100 × {1-(salt concentration in permeated water/salt concentration in supplying water)}

(Membrane permeation flux)

Each of the above brines was used as supplying water, and the membrane permeation flux ($m^3/m^2$/day) was determined based on the amount (cubic meter $m^3$) of water permeated per square meter of the membrane surface per day.

(Ratio of amount of permeated water after 100 L/$m^2$ water permeation)

The membrane permeation flux after 30 minutes ($m^3/m^2$/day) and the membrane permeation flux after 100 L / $m^2$ water permeation ($m^3/m^2$/day) were respectively determined based on, using the brine as the supply water, the amount of permeated water ($m^3$) 30 minutes after starting to supply at an operating pressure of 2.0 MPa and the amount of permeated water ($m^3$) when the total amount of permeated water reaches 100 L / $m^2$. The ratio of amount of permeated water after 100 L/$m^2$ water permeation was determined by the following expression.

(Ratio of amount of permeated water after 100 L/$M^2$ water permeation) = (Membrane permeation flux after 100 L/$m^2$ permeation) / (Membrane permeation flux after 30 minutes)

(Amount of attached inorganic scales)

For the separation membrane that has reached a total amount of water production of 100 L/$m^2$, attached substances on the surface of the separation membrane was extracted with a 1% by weight aqueous nitric acid solution. Using a P-4010 model ICP (high-frequency inductively coupled plasma emission analysis) device manufactured by Hitachi Corporation, a total amount (g) of adsorbed inorganic ingredients was measured, and an amount (mg/$m^2$) of attached inorganic scales was calculated based on the membrane area of the separation membrane element.

(Preparation of microporous supporting membrane)

A 15.0% by weight dimethylformamide (DMF) solution of polysulfone was cast on a nonwoven fabric (air permeability: 0.5 to 1 cc/$cm^2$/sec) composed of a polyester fiber at a thickness of 180 μm at room temperature (25°C)

and the resulting membrane was immediately immersed in pure water and allowed to stand for 5 minutes, whereby a microporous supporting membrane (thickness: 150 to 160 μm) composed of a fiber-reinforced polysulfone supporting membrane was prepared.

(Preparation of separation membrane A)

Then, the microporous supporting membrane was immersed for 10 seconds in an aqueous solution prepared by dissolution so as to achieve 2.0% by weight of 2-methylpiperazine, 1.0% by weight of trisodium phosphate, and 200 ppm of sodium dodecyl diphenyl ether disulfonate. Thereafter, excessive aqueous solution was removed by nitrogen blowing from an air nozzle, a solution obtained by dissolving trimesic acid chloride in n-decane so as to be 0.5% by weight was uniformly applied onto the whole surface of the porous supporting layer (application temperature: 20°C). Then, in order to remove excessive solution from the membrane, the membrane was held vertically to drain the solution and dried by air blowing at 25°C using an air blower. Thereafter, the membrane was washed with pure water at 80°C for 2 minutes to obtain a separation membrane A.

(Preparation of separation membrane B)

The microporous supporting membrane was immersed for 2 minutes in an aqueous solution containing a polyfunctional amine prepared so that the molar ratio of metaphenylenediamine to 1,3,5-triaminobenzene was 70/30 in an amount of 1.5% by weight as the whole polyfunctional amine and 3.0% by weight of ε-caprolactam, and then the supporting membrane was gradually lifted up in a vertical direction. After excessive aqueous solution was removed from the supporting membrane surface by nitrogen blowing from an air nozzle, an n-decane solution containing 0.05% by weight of trimesic acid chloride was applied so that the surface was completely wetted, followed by standing for 1 minute. Then, in order to remove excessive solution from the membrane, the membrane was held vertically for 2 minutes to drain the solution and dried by gas blowing at 20°C using an air blower. After the thus obtained separation membrane was treated with an aqueous solution containing 0.7% by weight of sodium nitrite and 0.1% by weight of sulfuric acid at room temperature for 2 minutes, the membrane was immediately washed with water and stored at room temperature to obtain a separation membrane B.

(Preparation of separation membrane C)

The microporous supporting membrane was immersed for 2 minutes in an aqueous solution containing 0.25% by weight of piperazine, and the supporting membrane was gradually lifted up in a vertical direction. After excessive aqueous solution was removed from the supporting membrane surface by nitrogen blowing from an air nozzle, an n-decane solution containing 0.17% by weight of trimesic acid chloride was applied in a ratio of 160 $cm^3/m^2$ so that the surface was completely wetted, followed by standing for 1 minute. Then, in order to remove excessive solution from the membrane, the membrane was held vertically for 1 minute to drain the solution and dried by gas blowing at 20°C using an air blower. After drying, the membrane was immediately washed with water and stored at room temperature to obtain a separation membrane C.

(Preparation of separation membrane D)

The microporous supporting membrane was immersed for 2 minutes in an aqueous solution containing 1.0% by weight of piperazine, 1.5% by weight of trisodium phosphate dodecahydrate, and 0.5% by weight of sodium dodecyl sulfate, and the supporting membrane was gradually lifted up in a vertical direction. After excessive aqueous solution was removed from the supporting membrane surface by nitrogen blowing from an air nozzle, an n-decane solution containing 0.2% by weight of trimesic acid chloride was applied in a ratio of 160 $cm^3/m^2$ so that the surface was completely wetted, followed by standing for 1 minute. Then, in order to remove excessive solution from the membrane, the membrane was held vertically for 1 minute to drain the solution and dried by gas blowing at 20°C using an air blower. After drying, the membrane was immediately washed with water and stored at room temperature to obtain a separation membrane D.

(Preparation of separation membrane E)

After SCL-100 (a cellulose acetate reverse osmosis membrane manufactured by Toray Industries, Inc.) was treated at room temperature for 24 hours with a 0.5% by weight aqueous sodium hypochlorite solution adjusted to pH 9, the membrane was immediately washed with water and stored at room temperature to obtain a separation membrane E.

(Preparation of separation membrane F)

After the separation membrane C was treated at room temperature for 24 hours with a 0.5% by weight aqueous sodium hypochlorite solution adjusted to pH 9, the membrane was immediately washed with water and stored at room temperature to obtain a separation membrane F.

(Preparation of separation membrane G)

A separation membrane G was obtained in the same manner as Preparation of separation membrane A except that 2.4% by weight of 2-methylpiperazine was used instead of 2.0% by weight of 2-methylpiperazine.

(Preparation of separation membrane H)

A separation membrane H was obtained in the same manner as Preparation of separation membrane A except that 1.5% by weight of 2-methylpiperazine was used instead of 2.0% by weight of 2-methylpiperazine, and 0.40% by weight of trimesic acid chloride is was used instead of 0.50% by weight of trimesic acid chloride.

(Example 1)

Using the separation membrane A as a separation membrane, the ion removal ratio and water permeation performance were evaluated using each of the brines A and B as a raw water. The results are shown in Table 1 together with the isopropyl alcohol removal ratio and the glucose removal ratio.

(Example 2)

Evaluation was performed in the same manner as in Example 1 except that the separation membrane G was used as a separation membrane. The results are shown in Table 1.

(Example 3)

Evaluation was performed in the same manner as in Example 1 except that the separation membrane H was used as a separation membrane. The results are shown in Table 1.

(Comparative Example 1)

Evaluation was performed in the same manner as in Example 1 except that the separation membrane B was used as a separation membrane. The results are shown in Table 1.

(Comparative Example 2)

Evaluation was performed in the same manner as in Example 1 except that the separation membrane C was used as a separation membrane. The results are shown in Table 1.

(Comparative Example 3)

Evaluation was performed in the same manner as in Example 1 except that the separation membrane D was used as a separation membrane. The results are shown in Table 1.

(Comparative Example 4)

Evaluation was performed in the same manner as in Example 1 except that the separation membrane E was used as a separation membrane. The results are shown in Table 1.

(Comparative Example 5)

Evaluation was performed in the same manner as in Example 1 except that the separation membrane F was used as a separation membrane. The results are shown in Table 1.

As seen in the results shown in Table 1, it was apparent that a glucose removal ratio needs to be 50% or more

for exhibiting the blocking ability against ions such as magnesium ion and sulfate ion which are to be purification-inhibiting substances and also the difference between the glucose removal ratio and the isopropyl alcohol removal ratio needs to be 50% or more considering a prevention of organic scale generation, an appropriate membrane permeation flux, and a balance of a selective permeation property ($Mg^{2+}/Li^{+}$ ratio).

Table 1

| | | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|---|
| Isopropyl alcohol removal ratio (%) | | | 3 | 28 | 6 | 33 | 29 | 44 | 70 | 9 |
| Glucose removal ratio (%) | | | 75 | 85 | 58 | 96 | 93 | 89 | 99 | 44 |
| Brine A | Ion concentration | mg/L | Removal ratio | Removal ratio | Removal ratio | Removal ratio | Removal ratio | Removal ratio | Removal ratio | Removal ratio |
| | | | % | % | % | % | % | % | % | % |
| | $Li^+$ | 220 | 0.1 | 1.5 | 0.1 | 3.9 | 4.1 | 10.1 | 49.0 | 1.1 |
| | $Na^+$ | 6600 | 0.1 | 2.1 | 0.1 | 14.3 | 15.0 | 15.4 | 41.0 | 0.3 |
| | $K^+$ | 8800 | 11.2 | 13.7 | 8.0 | 14.0 | 18.3 | 15.4 | 38.2 | 6.0 |
| | $Me^{2+}$ | 13400 | 66.0 | 77.0 | 45.5 | 90.1 | 91.4 | 54.0 | 88.0 | 5.5 |
| | $Ca^{2+}$ | 450 | 56.0 | 65.5 | 39.0 | 88.1 | 90.1 | 59.2 | 92.0 | 2.3 |
| | $SO_4^{2-}$ | 6000 | 81.0 | 90.2 | 54.8 | 99.9 | 99.2 | 95.5 | 94.5 | 3.2 |
| | $Cl^-$ | 71000 | 12.2 | 22.6 | 8.7 | 40.0 | 29.2 | 18.9 | 51.0 | 3.3 |
| | $Mg^{2+}/Li^+$ | 60.9 | 20.7 | 14.2 | 33.2 | 6.3 | 5.5 | 31.2 | 14.3 | 58.2 |
| | membrane permeation flux ($m^3/m^2/day$) | | 1.82 | 1.53 | 1.98 | 0.74 | 0.44 | 1.23 | 0.04 | 0.73 |
| | Ratio of amount of permeated water after 100 $L/m^2$ water permeation | | 0.88 | 0.75 | 0.91 | 0.60 | 0.61 | 0.69 | 0.77 | 0.92 |
| | Amount of attached inorganic scales ($mg/m^2$) | | 34 | 48 | 31 | 159 | 149 | 89 | 73 | 44 |

(continued)

| Brine B | Ion concentration | mg/L | Removal ratio | Removal ratio | Removal ratio | Removal ratio | Removal ratio | Removal ratio | Removal ratio | Removal ratio |
|---|---|---|---|---|---|---|---|---|---|---|
| | | | % | % | % | % | % | % | % | % |
| | $Li^+$ | 460 | 0.1 | 0.1 | 0.1 | -1.5 | -1.0 | -2.0 | 74.3 | 1.1 |
| | $Na^+$ | 24000 | 0.5 | 1.2 | 0.3 | 2.3 | -1.1 | 5.4 | 77.7 | 2.0 |
| | $K^+$ | 25000 | 12.0 | 14.3 | 9.1 | 5.5 | 2.2 | 7.4 | 75.5 | 2.1 |
| | $Mg^{2+}$ | 14000 | 73.0 | 51.1 | 51.1 | 86.6 | 92.0 | 77.3 | 95.0 | 4.3 |
| | $Ca^{2+}$ | 2600 | 57.0 | 59.0 | 40.6 | 84.5 | 90.5 | 81.0 | 96.1 | 10.0 |
| | $SO_4^{2-}$ | 15000 | 75.0 | 86.7 | 50.2 | 99.9 | 99.7 | 98.0 | 98.0 | 2.4 |
| | $Cl^-$ | 132000 | 14.0 | 17.9 | 9.9 | 54.4 | 74.3 | 60.3 | 90.3 | 4.3 |
| | $Mg^{2+}/Li^+$ | 30.4 | 8.2 | 14.9 | 14.9 | 4.0 | 2.4 | 6.8 | 5.9 | 29.5 |
| | membrane permeation flux ($m^3/m^2/day$) | | 0.65 | 0.55 | 0.78 | 0.22 | 0.13 | 0.33 | >0.01 | 0.74 |
| | Ratio of amount of permeated water after 100 $L/m^2$ water permeation | | 0.88 | 0.76 | 0.92 | 0.60 | 0.61 | 0.69 | 0.77 | 0.92 |
| | Amount of attached inorganic scales ($mg/m^2$) | | 39 | 53 | 37 | 175 | 155 | 100 | 98 | 48 |
| Note: the case where the removal ratio was shown as a negative value means that the ion was enriched | | | | | | | | | | |

INDUSTRIAL APPLICABILITY

The present invention can be suitably utilized as a method for efficient separation and recovery of alkali metals such as lithium and potassium from lake water, ground water, industrial waste water, and the like.

## Claims

1. A method for producing an alkali metal salt, comprising:

   a pretreatment step of removing a purification-inhibiting substance from an aqueous alkali metal salt solution with a separation membrane selected to have a glucose removal ratio and an isopropyl alcohol removal ratio simultaneously satisfying the following expressions (1) and (2) when each of a 1000 ppm aqueous glucose solution having a temperature of 25°C and pH of 6.5 and a 1000 ppm aqueous isopropyl alcohol solution having a temperature of 25°C and pH of 6.5 is permeated through the separation membrane at an operating pressure of 0.75 MPa and
   a recovery step of recovering an alkali metal salt from the aqueous alkali metal salt solution after the pretreatment step:

$$90\% > \text{Glucose removal ratio} \geq 50\% \ldots (1),$$

$$\text{Glucose removal ratio} - \text{Isopropyl alcohol removal ratio} \geq 50\% \ldots (2),$$

   wherein the purification-inhibiting substance includes alkaline earth metal salts and sulfate salts, and
   wherein the separation membrane is a nanofiltration membrane having a nonwoven fabric substrate, a polysulfone support provided on the substrate, and a polyamide functional layer provided on the support, wherein the polyamide functional layer contains a crosslinked polyamide obtained by interfacial polymerization of a piperazine compound represented by the general formula (1) with a divalent or multivalent polyfunctional acid halide,

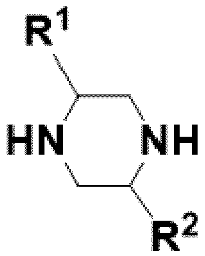

formula (1)

   wherein $R^1$ of the general formula (1) represents an alkyl group having 1 to 6 carbon atoms, a phenyl group, a benzyl group, $COOR^3$, $CONHR^3$, $CONR^3_2$ or $OR^3$, and $R^3$ represents a hydrogen, an alkyl group having 1 to 6 carbon atoms, a phenyl group or a benzyl group, and $R^2$ represents a hydrogen, an alkyl group having 1 to 6 carbon atoms, a phenyl group, a benzyl group, $COOR^4$, $CONHR^4$, $CONR^4_2$ or $OR^4$, and $R^4$ represents a hydrogen, an alkyl group having 1 to 6 carbon atoms, a phenyl group or a benzyl group.

2. The method for producing an alkali metal salt according to claim 1, wherein a calcium ion concentration in the aqueous alkali metal salt solution is 0.01 times or more and 100 times or less the lithium ion concentration.

3. The method for producing an alkali metal salt according to claim 1 or 2, wherein a lithium ion concentration in the aqueous alkali metal salt solution falls within the range of 0.5 ppm or more to 10000 ppm or less.

4. The method for producing an alkali metal salt according to any one of claims 1 to 3, wherein a magnesium ion concentration in the aqueous alkali metal salt solution is 1000 times or less the lithium ion concentration.

5. The method for producing an alkali metal salt according to any one of claims 1 to 4, wherein an amount of permeated water is 2.5 $m^3/m^2$/day or more when each of a 1000 ppm aqueous glucose solution having a temperature of 25°C

and pH of 6.5 and a 1000 ppm aqueous isopropyl alcohol solution having a temperature of 25°C and pH of 6.5 is permeated through the separation membrane at an operating pressure of 0.75 MPa.

**6.** The method for producing an alkali metal salt according to any one of claims 1 to 5, comprising a step of mixing a part of the aqueous alkali metal salt solution with a permeated water resulting from the pretreatment step.

**7.** The method for producing an alkali metal salt according to any one of claims 1 to 6, wherein the pretreatment step removes the purification-inhibiting substance in the aqueous alkali metal salt solution and also enriches lithium.

**8.** The method for producing an alkali metal salt according to any one of claims 1 to 7, wherein, the recovery step enriches the alkali metal salt in the aqueous alkali metal salt solution after the pretreatment step.

**9.** The method for producing an alkali metal salt according to any one of claims 1 to 8, wherein the pretreatment step is performed until the magnesium ion concentration in the aqueous alkali metal salt solution becomes 7 times or less the lithium ion concentration.

**10.** The method for producing an alkali metal salt according to any one of claims 1 to 9, wherein the purification-inhibiting substance is at least one selected from the group consisting of a magnesium salt and a sulfate salt.

**11.** The method for producing an alkali metal salt according to any one of claims 1 to 10, wherein an operating pressure of the membrane separation at the pretreatment step is equal to or lower than an osmotic pressure of the aqueous alkali metal salt solution.

**12.** The method for producing an alkali metal salt according to any one of claims 1 to 11, wherein the separation membrane has a magnesium sulfate removal ratio of 70% or more when a 2000 ppm aqueous magnesium sulfate solution having a temperature of 25°C and pH of 6.5 is permeated through the separation membrane at an operating pressure of 0.75 MPa.

**13.** The method for producing an alkali metal salt according to any one of claims 1 to 12, wherein the separation membrane has a lithium chloride removal ratio of 20% or less when a 2000 ppm aqueous lithium chloride solution having a temperature of 25°C and pH of 6.5 is permeated through the separation membrane at an operating pressure of 0.75 MPa.

**14.** The method for producing an alkali metal salt according to any one of claims 1 to 13, wherein, in the pretreatment step, the aqueous alkali metal salt solution is supplied to the separation membrane in the pressure range of 0.1 MPa or more to 8 MPa or less.

## Patentansprüche

**1.** Verfahren zur Herstellung eines Alkalimetallsalzes, umfassend:

einen Vorbehandlungsschritt des Entfernens einer reinigungshemmenden Substanz aus einer wässrigen Alkalimetallsalzlösung mit einer Trennmembran, die so ausgewählt ist, dass sie ein Glukoseentfernungsverhältnis und ein Isopropylalkoholentfernungsverhältnis aufweist, die gleichzeitig die folgenden Bedingungen (1) und (2) erfüllen, wenn jeweils eine 1000 ppm wässrige Glukoselösung mit einer Temperatur von 25 °C und einem pH-Wert von 6,5 und eine 1000 ppm wässrige Isopropylalkohollösung mit einer Temperatur von 25 °C und einem pH-Wert von 6,5 bei einem Betriebsdruck von 0,75 MPa durch die Trennmembran permeiert wird, und
einen Rückgewinnungsschritt des Rückgewinnens eines Alkalimetallsalzes aus der wässrigen Alkalimetallsalzlösung nach dem Vorbehandlungsschritt:

$$90\% > \text{Glukoseentfernungsverhältnis} \geq 50\% \ldots (1),$$

$$\text{Glukoseentfernungsverhältnis} - \text{Isopropylalkoholentfernungsverhältnis} \geq 50\% \ldots$$

(2),

wobei die reinigungshemmende Substanz Erdalkalimetallsalze und Sulfatsalze umfasst, und
wobei die Trennmembran eine Nanofiltrationsmembran ist, die ein nicht gewebtes Vliessubstrat, einen auf dem Substrat bereitgestellten Polysulfonträger und eine auf dem Träger bereitgestellte Polyamidfunktionsschicht aufweist, wobei die Polyamidfunktionsschicht ein vernetztes Polyamid enthält, das durch Grenzflächenpolymerisation einer durch die allgemeine Formel (1) dargestellten Piperazinverbindung mit einem zweiwertigen oder mehrwertigen polyfunktionellen Säurehalogenid erhalten wird,

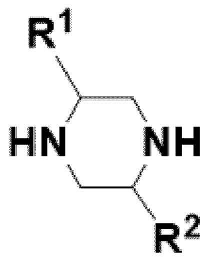

Formel (1)

wobei $R^1$ der allgemeinen Formel (1) eine Alkylgruppe mit 1 bis 6 Kohlenstoffatomen, eine Phenylgruppe, eine Benzylgruppe, $COOR^3$, $CONHR^3$, $CONR^3_2$ oder $OR^3$ darstellt, und $R^3$ Wasserstoff, eine Alkylgruppe mit 1 bis 6 Kohlenstoffatomen, eine Phenylgruppe oder eine Benzylgruppe darstellt, und $R^2$ Wasserstoff, eine Alkylgruppe mit 1 bis 6 Kohlenstoffatomen, eine Phenylgruppe, eine Benzylgruppe, $COOR^4$, $CONHR^4$, $CONR^4_2$ oder $OR^4$ darstellt, und $R^4$ Wasserstoff, eine Alkylgruppe mit 1 bis 6 Kohlenstoffatomen, eine Phenylgruppe oder eine Benzylgruppe darstellt.

**2.** Verfahren zur Herstellung eines Alkalimetallsalzes gemäß Anspruch 1, wobei eine Calciumionenkonzentration in der wässrigen Alkalimetallsalzlösung das 0,01 - fache oder mehr und das 100-fache oder weniger der Lithiumionenkonzentration beträgt.

**3.** Verfahren zur Herstellung eines Alkalimetallsalzes gemäß Anspruch 1 oder 2, wobei eine Lithiumionenkonzentration in der wässrigen Alkalimetallsalzlösung in den Bereich von 0,5 ppm oder mehr bis 10000 ppm oder weniger fällt.

**4.** Verfahren zur Herstellung eines Alkalimetallsalzes gemäß einem der Ansprüche 1 bis 3, wobei eine Magnesium ionenkonzentration in der wässrigen Alkalimetallsalzlösung das 1000-fache oder weniger der Lithiumionenkonzentration beträgt.

**5.** Verfahren zur Herstellung eines Alkalimetallsalzes gemäß einem der Ansprüche 1 bis 4, wobei eine permeierte Wassermenge 2,5 $m^3/m^2$/Tag oder mehr beträgt, wenn jeweils eine 1000 ppm wässrige Glukoselösung mit einer Temperatur von 25 °C und einem pH-Wert von 6,5 und eine 1000 ppm wässrige Isopropylalkohollösung mit einer Temperatur von 25 °C und einem pH-Wert von 6,5 bei einem Betriebsdruck von 0,75 MPa durch die Trennmembran permeiert wird.

**6.** Verfahren zur Herstellung eines Alkalimetallsalzes gemäß einem der Ansprüche 1 bis 5, umfassend einen Schritt des Mischens eines Teils der wässrigen Alkalimetallsalzlösung mit einem permeierten Wasser, das aus dem Vorbehandlungsschritt resultiert.

**7.** Verfahren zur Herstellung eines Alkalimetallsalzes gemäß einem der Ansprüche 1 bis 6, wobei der Vorbehandlungsschritt die reinigungshemmende Substanz in der wässrigen Alkalimetallsalzlösung entfernt und auch Lithium anreichert.

**8.** Verfahren zur Herstellung eines Alkalimetallsalzes gemäß einem der Ansprüche 1 bis 7, wobei der Rückgewinnungsschritt das Alkalimetallsalz in der wässrigen Alkalimetallsalzlösung nach dem Vorbehandlungsschritt anreichert.

**9.** Verfahren zur Herstellung eines Alkalimetallsalzes gemäß einem der Ansprüche 1 bis 8, wobei der Vorbehandlungsschritt durchgeführt wird, bis die Magnesiumionenkonzentration in der wässrigen Alkalimetallsalzlösung das 7-fache oder weniger der Lithiumionenkonzentration wird.

**10.** Verfahren zur Herstellung eines Alkalimetallsalzes gemäß einem der Ansprüche 1 bis 9, wobei die reinigungshemmende Substanz mindestens eine ausgewählt aus der Gruppe bestehend aus einem Magnesiumsalz und einem Sulfatsalz ist.

**11.** Verfahren zur Herstellung eines Alkalimetallsalzes gemäß einem der Ansprüche 1 bis 10, wobei ein Betriebsdruck der Membrantrennung in dem Vorbehandlungsschritt gleich oder niedriger als ein osmotischer Druck der wässrigen Alkalimetallsalzlösung ist.

**12.** Verfahren zur Herstellung eines Alkalimetallsalzes gemäß einem der Ansprüche 1 bis 11, wobei die Trennmembran ein Magnesiumsulfatentfernungsverhältnis von 70 % oder mehr aufweist, wenn eine 2000 ppm wässrige Magnesiumsulfatlösung mit einer Temperatur von 25 °C und einem pH-Wert von 6,5 bei einem Betriebsdruck von 0,75 MPa durch die Trennmembran permeiert wird.

**13.** Verfahren zur Herstellung eines Alkalimetallsalzes gemäß einem der Ansprüche 1 bis 12, wobei die Trennmembran ein Lithiumchloridentfernungsverhältnis von 20 % oder weniger aufweist, wenn eine 2000 ppm wässrige Lithiumchloridlösung mit einer Temperatur von 25 °C und einem pH-Wert von 6,5 bei einem Betriebsdruck von 0,75 MPa durch die Trennmembran permeiert wird.

**14.** Verfahren zur Herstellung eines Alkalimetallsalzes gemäß einem der Ansprüche 1 bis 13, wobei in dem Vorbehandlungsschritt die wässrige Alkalimetallsalzlösung der Trennmembran in dem Druckbereich von 0,1 MPa oder mehr bis 8 MPa oder weniger zugeführt wird.

**Revendications**

**1.** Un procédé de production d'un sel de métal alcalin, comprenant :

une étape de prétraitement consistant à éliminer une substance inhibitrice de purification d'une solution aqueuse de sel de métal alcalin avec une membrane de séparation sélectionnée pour avoir un rapport d'élimination du glucose et un rapport d'élimination de l'alcool isopropylique satisfaisant simultanément aux expressions (1) et (2) suivantes lorsque chacune d'une solution aqueuse de glucose de 1000 ppm ayant une température de 25°C et un pH de 6,5 et d'une solution aqueuse d'alcool isopropylique de 1000 ppm ayant une température de 25°C et un pH de 6,5 est perméée à travers la membrane de séparation à une pression de fonctionnement de 0,75 MPa et
une étape de récupération consistant à récupérer un sel de métal alcalin à partir de la solution aqueuse de sel de métal alcalin après l'étape de prétraitement :

$$90\ \% > \text{rapport d'élimination du glucose} \geq 50\ \% \ \dots (1),$$

$$\text{rapport d'élimination du glucose} - \text{rapport d'élimination de l'alcool isopropylique} \geq 50\ \% \qquad (2),$$

dans lequel la substance inhibitrice de purification comprend des sels de métal alcalino-terreux et des sels de sulfate, et
dans lequel la membrane de séparation est une membrane de nanofiltration ayant un substrat de tissu non tissé, un support de polysulfone prévu sur le substrat, et une couche fonctionnelle de polyamide disposée sur le support, dans lequel la couche fonctionnelle de polyamide contient un polyamide réticulé obtenu par polymérisation interfaciale d'un composé de pipérazine représenté par la formule générale (1) avec un halogénure d'acide polyfonctionnel divalent ou multivalent,

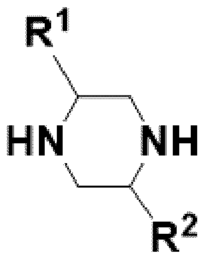

formule (1)

dans lequel $R^1$ de la formule générale (1) représente un groupe alkyle ayant 1 à 6 atomes de carbone, un groupe phényle, un groupe benzyle, $COOR^3$, $CONHR^3$, $CONR^3_2$ ou $OR^3$, et $R^3$ représente un hydrogène, un groupe alkyle ayant 1 à 6 atomes de carbone, un groupe phényle ou un groupe benzyle, et $R^2$ représente un hydrogène, un groupe alkyle ayant 1 à 6 atomes de carbone, un groupe phényle, un groupe benzyle, $COOR^4$, $CONHR^4$, $CONR^4_2$ ou $OR^4$, et $R^4$ représente un hydrogène, un groupe alkyle ayant 1 à 6 atomes de carbone, un groupe phényle ou un groupe benzyle.

**2.** Le procédé de production d'un sel de métal alcalin selon la revendication 1, dans lequel une concentration en ions calcium dans la solution aqueuse de sel de métal alcalin est 0,01 fois ou plus et 100 fois ou moins la concentration en ions lithium.

**3.** Le procédé de production d'un sel de métal alcalin selon la revendication 1 ou 2, dans lequel une concentration en ions lithium dans la solution aqueuse de sel de métal alcalin se situe dans la plage de 0,5 ppm ou plus à 10000 ppm ou moins.

**4.** Le procédé de production d'un sel de métal alcalin selon l'une quelconque des revendications 1 à 3, dans lequel une concentration en ions magnésium dans la solution aqueuse de sel de métal alcalin est 1000 fois ou moins la concentration en ions lithium.

**5.** Le procédé de production d'un sel de métal alcalin selon l'une quelconque des revendications 1 à 4, dans lequel une quantité d'eau perméée est de 2,5 $m^3/m^2$ /jour ou plus lorsque chacune d'une solution aqueuse de glucose de 1000 ppm ayant une température de 25°C et un pH de 6,5 et d'une solution aqueuse d'alcool isopropylique de 1000 ppm ayant une température de 25°C et un pH de 6,5 est perméée à travers la membrane de séparation à une pression de fonctionnement de 0,75 MPa.

**6.** Le procédé de production d'un sel de métal alcalin selon l'une quelconque des revendications 1 à 5, comprenant une étape consistant à mélanger une partie de la solution aqueuse de sel de métal alcalin avec une eau perméée résultant de l'étape de prétraitement.

**7.** Le procédé de production d'un sel de métal alcalin selon l'une quelconque des revendications 1 à 6, dans lequel l'étape de prétraitement élimine la substance inhibitrice de purification dans la solution aqueuse de sel de métal alcalin et enrichit également le lithium.

**8.** Le procédé de production d'un sel de métal alcalin selon l'une quelconque des revendications 1 à 7, dans lequel l'étape de récupération enrichit le sel de métal alcalin dans la solution aqueuse de sel de métal alcalin après l'étape de prétraitement.

**9.** Le procédé de production d'un sel de métal alcalin selon l'une quelconque des revendications 1 à 8, dans lequel l'étape de prétraitement est effectuée jusqu'à ce que la concentration en ions magnésium dans la solution aqueuse de sel de métal alcalin devienne 7 fois ou moins la concentration en ions lithium.

**10.** Le procédé de production d'un sel de métal alcalin selon l'une quelconque des revendications 1 à 9, dans lequel la substance inhibitrice de purification est au moins une substance sélectionnée dans le groupe constitué d'un sel de magnésium et d'un sel de sulfate.

**11.** Le procédé de production d'un sel de métal alcalin selon l'une quelconque des revendications 1 à 10, dans lequel une pression de fonctionnement de la séparation de membrane à l'étape de prétraitement est égale ou inférieure à une pression osmotique de la solution aqueuse de sel de métal alcalin.

12. Le procédé de production d'un sel de métal alcalin selon l'une quelconque des revendications 1 à 11, dans lequel la membrane de séparation a un rapport d'élimination du sulfate de magnésium de 70 % ou plus lorsqu'une solution aqueuse de sulfate de magnésium de 2000 ppm ayant une température de 25 °C et un pH de 6,5 est perméée à travers la membrane de séparation à une pression de fonctionnement de 0,75 MPa.

13. Le procédé de production d'un sel de métal alcalin selon l'une quelconque des revendications 1 à 12, dans lequel la membrane de séparation a un rapport d'élimination du chlorure de lithium de 20 % ou moins lorsqu'une solution aqueuse de chlorure de lithium de 2000 ppm ayant une température de 25 °C et un pH de 6,5 est perméée à travers la membrane de séparation à une pression de fonctionnement de 0,75 MPa.

14. Le procédé de production d'un sel de métal alcalin selon l'une quelconque des revendications 1 à 13, dans lequel, à l'étape de prétraitement, la solution aqueuse de sel de métal alcalin est fournie à la membrane de séparation en la plage de pression de 0,1 MPa ou plus à 8 MPa ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012074074 A
- US 20130292333 A1
- WO 2013005694 A1
- WO 2013146391 A1
- WO 2012093724 A1
- WO 2012077610 A1
- JP 4414216 B
- JP 4011928 B
- JP 11226366 A